(19) Europäisches Patentamt

European Patent Office

Office européen des brevets

(11) **EP 1 275 743 A2**

(12) **EUROPÄISCHE PATENTANMELDUNG**

(43) Veröffentlichungstag:
**15.01.2003 Patentblatt 2003/03**

(51) Int Cl.[7]: **C22C 19/05**

(21) Anmeldenummer: **02015236.9**

(22) Anmeldetag: **09.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **12.07.2001 DE 10133925**

(71) Anmelder: **Deutsches Zentrum für Luft- und Raumfahrt e.V.**
**51147 Köln (DE)**

(72) Erfinder:
• **Schubert, Olaf**
  **22303 Hamburg (DE)**
• **Mangers, Helmut**
  **51143 Köln (DE)**
• **Fritscher, Klaus, Dr.**
  **51107 Köln (DE)**

(74) Vertreter: **Jönsson, Hans-Peter, Dr. et al**
**Patentanwälte,**
**von Kreisling Selting Werner,**
**Deichmannhaus am Dom**
**50667 Köln (DE)**

(54) **Hochtemperaturresistente ausdehnungsangepasste metallische Schutz- und Haftschichten auf Superlegierungen**

(57)  Gegenstand der Erfindung ist die chemische Zusammensetzung von Ni-Legierungen, beschichtete Substrate und ein Verfahren zu ihrer Herstellung.

Die chemische Zusammensetzung von Ni-Legierungen zum Oxidationsschutz und zur Haftanbindung von keramischen Wärmedämmschichten hat folgende Zusammensetzung: 1 bis 8 Masse% Cr, 5,2 bis 7 Masse% Al, 8 bis 30 Masse% Re, 6 bis 15 Masse% Ta, 0,03 bis 1,0 Masse% Y und Rest Ni.

EP 1 275 743 A2

**Beschreibung**

Gegenstand der Erfindung ist eine chemische Zusammensetzung von Ni-Legierungen, beschichtete Substrate und ein Verfahren zu ihrer Herstellung.

Im Bereich der Technik und insbesondere der Energiewandlung werden hochwarmfeste Werkstoffe eingesetzt, die außer den vielfältigen mechanischen Einflüssen auch heißen oxidierenden und korrosiven Gasen ausgesetzt sind. Beispielsweise arbeiten metallische und in zunehmendem Maße auch einkristalline Turbinenlaufschaufeln der Industrie- und Fluggasturbinen unter diesen Bedingungen. Den komplexen thermomechanischen Belastungen, die die Schaufeln besonders stark in der ersten Stufe hinter der Brennkammer aufnehmen, können sie nur dadurch hinreichend widerstehen, wenn sie einerseits durch Einleiten von Kühlluft in Kühlkanälen innengekühlt werden und andererseits über ein äußeres Wärmedämmschichtsystem verfügen. Dieses System besteht in der Regel aus einer äußeren keramischen Schicht, meistens aus teilstabilisiertem Zirkoniumoxid, und aus einer metallischen Zwischenschicht. Die Zwischenschicht dient sowohl als Haftschicht für die aufgebrachte Keramikschicht als auch als Schutzschicht gegen unkontrollierte Hochtemperatur-Oxidation und - Korrosion. Durch Hochtemperaturoxidation bildet sich zwischen der Keramikschicht und der Haftschicht eine aluminiumreiche Oxidschicht, bevorzugt aus Korundphase, aus, deren Bildung unter aufgedampften Keramikschichten zur besseren Haftanbindung sogar erwünscht ist. Die metallischen Haftschichten können sehr unterschiedlich zusammengesetzt sein und zudem mit unterschiedlichen Verfahren aufgebracht werden.

Das Problem bekannter Haftschichten lässt sich sowohl auf die Entwicklung der einkristallinen Superlegierungen für den Einsatz bei höchsten Temperaturen als auch auf die Einführung von keramischen Wärmedämmschichten auf diesen Superlegierungen zurückführen. Beide Hochtechnologieerzeugnisse drängen auf den Markt, ohne dass bislang auf die damit verbundene Problematik umfassend eingegangen worden ist. So werden noch weitverbreitet Schutzschichten als Haftschichten eingesetzt, die auf "Selbstheilungsvermögen" hin optimiert worden sind, das heißt bei der Selbstheilung wird eine abgestoßene Oxidschuppe durch "Nachwachsen" einer neuen ersetzt, wodurch der Verlust der darauf haftenden Wärmedämmschicht in Kauf genommen wird.

Auch die mechanischen Eigenschaften dieser Schichten, insbesondere in solchen mit hohen $\beta$-NiAl-Anteilen, sind unbefriedigend, weil sie häufig bei tiefen Temperaturen spröde und daher rissanfällig sowie bei hohen Temperaturen ungenügend kriechbeständig sind und daher zum Abstreifen der Wärmedämmschichten im Hochtemperatureinsatz führen können. Die Gegenwart von zwei oder mehr Phasen mit unterschiedlichen physikalischen und mechanischen Eigenschaften kann zudem zu Ermüdungsproblemen führen und durch die Einbringung von Eigenspannungen die Interdiffusion erhöhen. Als Folge davon wird der Einkristallsubstratwerkstoff besonders im Langzeiteinsatz beeinträchtigt. Die chemische Kompatibilität der Schichten mit den Superlegierungen ist im Zusammenhang mit der Interdiffusion ein ernstes Problem, da die Schicht-Elemente, insbesondere hohe Chromgehalte in zahlreichen Auflageschichten, die Phasenstabilität der Superlegierung durch Bildung von TCP-Sprödphasen (topologically close packed) ernsthaft gefährden. Die Ausdehnungskoeffizienten der metallischen Schichten sind in der Regel größer als die der Substrate, wodurch neben der bereits erwähnten Einbringung von Eigenspannungen bei Temperaturwechseln sowohl die Haftung der schützenden Oxide als auch die Glätte der Außenschicht durch "rumpling" beeinträchtigt werden. Strömungsprobleme sind die Folge.

Letztlich ist noch keine Schicht entwickelt worden, die die ausschließliche Ausbildung der für die Haftung der keramischen Wärmedämmschichten notwendige Korundschicht gewährleistet. Diese Schicht zeichnet sich zusätzlich durch eine äußerst langsame Wachstumsrate aus. Entweder wird die Korundschicht auf den Schichten verzögert gebildet oder auch nur unvollständig, zum Teil müssen sogar unerwünschte Oxide in einem eigenen Verfahrensschritt entfernt werden, wodurch in allen Fällen wertvolle Ressourcen an Aluminium in der Haftschicht verloren sind.

Die Bildung von Übergangsoxiden des Aluminiums hat höhere Oxidationsgeschwindigkeiten zur Folge, die sich nicht etwa rückwirkend durch eine günstigere Barrierewirkung dieser Schicht nach ihrer Umwandlung in den stabilen Korund lohnen würden, sondern sie trägt zu einem beschleunigten Verlust an Aluminium aus der Haftschicht bei. Bereits durch die Entwicklung einer Haftschicht, die lediglich die frühzeitige Korundbildung gewährleisten würde, ließe sich die Dicke der bisher verwendeten Haftschichten stark herabsetzen.

Ein Großteil der metallischen Beschichtungen beruht auf Diffusions- und CVD-Verfahren, um zum Beispiel sogenannte Alitierschichten, die durch Reaktion des Substrats mit gasförmigen Al-Verbindungen entstehen, zu erzeugen. Eine weitere Gruppe von Schichten, die vor allem in diesem Kontext anzuführen sind, stellen die Auflageschichten dar. Zu den Verfahren, die Auflageschichten bilden, gehören galvanische und "Slurry coating" Aufschmelz-Beschichtungen, die vielfältigen Verfahren des Plasmaspritzens, das Sputtern und das Elektronenstrahlaufdampfen. Auch Kombinationen von zwei oder mehr Beschichtungsverfahren werden angewendet, um die Vorteile der Schichttypen miteinander zu verbinden.

Einen wesentlichen Anteil unter den Auflage-Oxidationsschutzschichten stellen dabei die MCrAlY-Schichten dar (M: Ni, Co, Ni+Co). Sie setzen sich in der Regel auf Grund höherer Al- und Cr-Gehalte aus $\gamma$-Ni- und $\beta$-NiAl-Phase und gelegentlich und in geringerem Maße aus den Phasen $\alpha$-Cr, $\gamma'$-Ni$_3$Al und $\sigma$- oder anderen TCP-Phasen zusammen.

Während die γ -Phase einen Beitrag zur Duktilität und Festigkeit bei höheren Temperaturen leistet, stellt die β-Phase ihr Al-Reservoir und ihr hohes Diffusionsvermögen bei höheren Temperaturen für die erforderliche Bildung einer oxidischen Schutzschicht zur Verfügung. Jedoch ist sie in mechanischer Hinsicht problematisch, vor allem wegen ihrer Sprödigkeit bei tiefen bis moderaten Temperaturen und wegen ihrer geringen Kriechfestigkeit bei hohen Temperaturen. Beispielhaft für diese Gruppe der MCrAlY-Schichten sei das Patent US-A-4,585,481 (D.K. Gupta) angeführt, worin bereits eine Verbesserung des Oxidationsverhaltens der Auflageschicht aus γ-Ni- und β-NiAl-Phase durch vereintes Zulegieren von Si+Hf herbeigeführt wird.

Ähnlich wird in US-A-4,743,514 (T.E. Strangman et al.) der weitere Zusatz von Ta beschrieben, der diese Art von Schutzschicht für das Aufbringen auf Einkristall-Bauteilen beschreibt, um dort verbesserte Diffusionsstabilität und Korrosionsfestigkeit durch ein ausgeprägteres Selbstheilungsvermögen der sich bildenden Oxidschichten zu bewirken.

Verbesserte Kontrolle des Interdiffusionsvermögens zwischen Schicht und Substrat wird mit einer Schicht im US-A-5,455,119 (T.A. Taylor et al.) bewirkt, die sich dadurch auszeichnet, dass sie durch "Einlegieren" von bestimmten Oxiden sowohl höhere Festigkeit als auch einen an das Substrat angepassten thermischen Ausdehnungskoeffizienten erhält, wodurch die ansonsten dominierenden Kriech- und Relaxationsprozesse ausgeschaltet werden. Eine Angleichung der Ausdehnungskoeffizienten, jedoch hier durch Einlagerung dafür geeigneter metallischer Phasen, wird in US-A-4,530,885 (J.E. Restall) und in US-A-5,080,981 (K. Fritscher) sowie hierzu ergänzende detaillierende Untersuchungen in C. Leyens et al.: Transformation and oxidation of a sputtered low-expansion Ni-Cr-Al-Ti-Si bond coating for thermal barrier coatings, Surface Coatings & Technology 94-95(1997) S. 155-160 angeführt. Eine andere Art zur Herabsetzung der Interdiffusion wird in US-A-5,556,713 (G.R. Leverant) durch Einbringen einer Re-Zwischenschicht beschrieben. Der Einfluss von Re als Legierungselement wird, neben einer Verbesserung der Korrosionsbeständigkeit und Absenkung der Interdiffusion, in einer Absenkung der Temperatur des Duktil-Spröde-Übergangs in US-A-5,401,307 (N. Czech et al.) bemerkt.

Zwischenschichten aus Pt, ebenfalls zur Herabsetzung der Interdiffusion, werden in EP 0 718 419 A2 (D.S. Rickerby et al.) erwähnt, wobei sie dadurch ursächlich die Haftung von Keramikschichten fördern. Im bereits erwähnten US-A-4,530,885 (loc.cit.) wird beschrieben, dass durch solche Schichten die Rissausbreitung günstig beeinflusst wird. In US-A-5,500,253 (M.C. Meelu) wird eine abschließende Platinschicht vorgeschlagen, um dadurch die chemische Wirkungen von Al und Cr zu unterstützen und einen möglichst umfassenden Schutz in einem breiten Temperaturbereich gegen Korrosionseinflüsse zu erzielen. In US-A-5,427,866 (B.A. Nagaraj et al.) wird eine ausschließliche Beschichtung bzw. Anreicherung der Randzonen der Superlegierungssubstrate mit Platinmetallen erwähnt, die bereits für die Haftung von Wärmedämmschichten ausreichend sei. In der WO 97/292 (D. Maxwell et al.) wird eine Cr-freie Haftschicht für keramische Wärmedämmschichten vorgestellt.

Dass auch ohne metallische Beschichtungen gute Haftung der Wärmedämmschichten auf Superlegierungen ermöglicht werden kann, wird in US-A-5,538,796 (J.C. Schaffer et al.) beschrieben. Auflageschichten, die alitiert werden, um die Al-Konzentration der Außenschicht zusätzlich zu erhöhen, werden in zahlreichen Patenten vorgeschlagen (US-A-5,500,253 loc. cit.). In US-A-5,236,745 (D.K. Gupta et al.) wird dabei der Einfluss auf eine Verbesserung der Haftung von Keramikschichten hervorgehoben. In US-A-5,498,484 (E.C. Duderstadt) wird als Auflagehaftschicht eine modifizierte Superlegierungschicht vorgeschlagen, die zusätzlich alitiert wird, um die Haftung von Keramikschichten zu optimieren.

Es hat daher nicht an Bemühungen gefehlt, Haftschichten mechanisch fester zu gestalten, um eine günstigere Formstabilität der Oberflächen im zyklischen Hochtemperatureinsatz zu haben, auf welchen keramische Schichten zuverlässiger haften sollen. So wird in US-A-5,316,866 (E.H. Goldman et al.) eine komplex mit refraktären Metallen mischkristallgehärtete γ-γ'-Schichtlegierung mit besonders hoher Thermoermüdungsbeständigkeit vorgeschlagen. In einer ähnlich gearteten Legierung wird in US-A-5,035,958 (M.R. Jackson) besonders auf ihre mechanische und chemische Verträglichkeit mit Substraten hingewiesen.

In den genannten Druckschriften sind jeweils Einzelprobleme der Haftschichten angesprochen und verbessert worden. Eine umfassende Schichtverbesserung, die möglichst alle Aspekte der mechanischen und chemischen Beständigkeit und Kompatibilität mit denen einer optimalen Haftung und Oxidationsbeständigkeit verbindet, liegt nicht vor.

Ziel zahlreicher Bemühungen ist es, so viel Al in der Oberfläche verfügbar zu haben, dass sich bei der Oxidation möglichst frühzeitig eine Aluminiumschicht ausbildet. Sie soll sowohl als effizienter Oxidationsschutz wirksam sein als auch die Haftung der Keramikschicht unterstützen. In gängigen MCrAlY-Auflagehaftschichten mit dem für sie charakteristischen β/γ-Phasenvorkommen sorgt die β-NiAl-Phase für die erforderlichen Al-Konzentrationen, um ein zuverlässiger Aluminiumoxidbildner in oxidierender Atmosphäre sein zu können. Diese Aluminiumschicht muss aus diesem Grund, ebenso auch die Haftschicht, mechanisch belastbar sein, gut haften und soll bei den hohen Einsatztemperaturen möglichst langsam und störungsfrei wachsen. Dies wird am vorteilhaftesten durch die Ausbildung von $\alpha$-$Al_2O_3$, also der Korundphase, gewährleistet. Diese Elgenschaften werden, von der Gasatmosphäre einmal abgesehen, im wesentlichen durch die chemischen und kristallographischen Zusammensetzung der Schicht und des Substrates, aber auch durch deren mechanische und physikalische Eigenschaften vorgegeben.

Die für geringe Oxidation und gute Keramikhaftung erwünschte $\alpha$-$Al_2O_3$-Bildung auf γ/γ'-β-Schicht-Legierun-

gen vom Typ NiCrAlY erfolgt bei der Oxidation im Temperaturbereich von 1000°C nach Untersuchungen von D. Clemens et al. [Fresenius J. Anal. Chem. 355(1996) S.703-706] unterschiedlich: auf den kubisch flächenzentrierten $\gamma$-$\gamma'$-Phasen bildet sich $\alpha$-$Al_2O_3$ leichter aus als auf der kubisch raumzentrierten $\beta$-NiAl-Phase, auf der Übergangsoxide des Aluminiums zunächst vorherrschen. Dies konnte auch für $\gamma$-$\beta$-Legierungen vom Schichttyp NiCoCrAlY bestätigt werden [K. Fritscher et al.: Microscopy of Oxidation 3, The Institute of Metals London (1997) S. 352-367]. Dies mag seine Ursache in einer günstigeren kristallographischen Orientierung zwischen $\gamma$-$\gamma'$-Phasen und $\alpha$-$Al_2O_3$ haben, die keimbildend für die $\alpha$-$Al_2O_3$ -Phase zu wirken vermögen.

Durch direkte elektronenmikroskopische Untersuchungen der Grenzflächen zwischen Metall und Oxid an oxidiertem NiCoCrAlY [O. Unal, T.E. Mitchell, A.H. Heuer, J. Am. Ceram. Soc. 77(1994) S. 984-92] konnte zum Beispiel in seltenen Fällen die Existenz einer epitaktischen Beziehungen zwischen den atomar dichtest gepackten Kristallflächen gefunden werden, die wie folgt lautet: Ni (111) || $\alpha$-$Al_2O_3$ (11$\bar{2}$3). Dieser Befund stützt die genannte Hypothese. Das $\alpha$-$Al_2O_3$-Gitter ist dabei gegenüber dem der entsprechenden Metallgitterfläche um 2.5 % aufgeweitet.

Es wird angenommen, was den bisherigen Wissensstand übersteigt und im Stand der Technik noch nicht bewiesen wurde, aber gerade deshalb Gegenstand dieser Erfindung ist, dass die Bereitstellung solcher Kristallflächen, die zueinander enger passenden Atomabstände auf bestimmten Kristallflächen aufweisen oder auch lediglich vergleichbare Passungsdichten der Atome an beliebigen Kristallflächen haben, zu einer spontaneren Bildung von $\alpha$-$Al_2O_3$ auf Grund epitaktischer oder sonstiger Atompassungen führen. Als Folge davon wäre eine Abnahme der Oxidationsgeschwindigkeit um etwa zwei Größenordnungen (nach M. W. Brumm, H. J. Grabke; The Oxidation Behaviour of NiAl, Corrosion Science 33(1992) S. 1677-1690), die der geringen Diffusionsgeschwindigkeit im $\alpha$-$Al_2O_3$-Gitter zugeordnet werden kann, zu erwarten. Somit ist die Wahl einer $\gamma$-$\gamma'$-Legierung als Haftschicht durchaus im Sinne dieser Erfindung, zumal die $\beta$-Phase oberhalb 700°C ihre Festigkeit einbüßt, das heißt Schichten mit hohem $\beta$-Anteil unter extremen Hochtemperaturbedingungen wirken möglicherweise "belastend" (engl.: parasitic loading) und die zusätzliche Last einer Wärmedämmschicht können sie nicht mehr sicher halten. Es sei jedoch angemerkt, dass auch in $\beta$-haltigen Legierungen geeignete Härtungsmechanismen mobilisiert werden können, die eine ausreichende Kriechfestigkeit der Schichten bewirken sollten.

Metallische Haftschichten, auf denen keramische Schichten aufgebracht werden sollen, sollen erfindungsgemäß den folgenden Katalog an zum Teil innovativen Eigenschaften vereinigen:

- Sie sollen mit dem Substrat verträglich sein; und das bedeutet ferner, sie sollen auch substratverträglich aufgebracht werden. Das heißt sie sollen möglichst ähnliche thermische Ausdehnung haben, um wenig Fehlstellen/Versetzungen bei thermischer Wechselbelastung zu initiieren, die ansonsten Einfluss auf schädigende Diffusions- und Kriechprozesse nähmen; dabei ist insbesondere an die modernen hochrefraktärmetallhaltigen einkristallinen Superlegierungen mit ihren vergleichsweise geringen thermischen Ausdehnungskoeffizienten gedacht. Die Ausdehnungskoeffizienten sollen sich dabei möglichst nahe an die von den Deckoxiden annähern. Sie sollen chemisch ähnlich sein, um ebenfalls wenig Interdiffusion und die Behinderung der Bildung von unerwünschten Phasen zu bewirken. Die Interdiffusion könnte erforderlichenfalls noch durch zusätzliche dünne Diffusionssperrschichten z. B. aus Platin oder/und Rhenium eingeschränkt werden. Die jeweiligen Schichten sollten speziell im Falle von Einkristallsubstraten ohne verformungsinduzierende Vorbehandlungen wie scharfes Strahlen oder ähnliches, die zu Rekristallisationserscheinungen führen können, bevorzugt mit einem "sanften" Verfahren wie zum Beispiel der PVD- oder CVD-Technologien aufgebracht werden.
- Sie sollten bei Einsatztemperatur noch über eine gewisse mechanische Festigkeit verfügen, die es erlaubt, dass die Aerodynamik der Laufschaufeloberflächen trotz des Gewichtes der Keramikschichten (Kriechbeständigkeit) und der Temperaturwechsel (Gefahr der Oberflächen-/Grenzflächenaufrauhung, engl.: rumpling, ratcheting) erhalten bleibt.
- Sie sollten über eine geringe Oxidationsneigung durch frühe Ausbildung von schützendem Aluminiumoxid in der chemisch stabilsten Modifikation des Korund verfügen, wobei die langfristige Haftung dieser Oxidschicht auf der Haftschicht durch geeignete Legierungsmaßnahmen (Seltene Erden, Yttrium und Platinmetalle) und sonstige haftungsfördernden Maßnahmen (minimale Konzentrationen grenzflächenaktiver Elemente wie S und O in der Schicht) gewährleistet sein soll.

Eine duktile Matrix ist nach spannungstheoretischen Ausführungen beispielsweise von H.E. Evans [Materials at High Temperatures 12(1994) S.219-227] jedoch zunächst am besten geeignet, um die Tendenz zum vorzeitigen Abplatzen der vor Oxidation schützenden Oxidschichten durch plastisches Verschließen der Bruchstelle zu mildern. Zufolge seinen Ausführungen kann durch Beistellung besonders fließfähiger Substrate das Abkühlungsintervall bis zum Abplatzen der schützenden Oxide erweitert werden oder die Oxide können als Alternative hierzu zu einer größeren kritischen Dicke anwachsen, ohne abzuplatzen. Andererseits wird jeder Wärmezyklus, wie dem damit vertrauten Fachmann bekannt ist, durch plastisches Fließen zu einer weiteren Aufrauhung der Oberfläche beitragen. Es kann aber unter bestimmten Bedingungen der Beitrag plastischer Veränderungen verringert werden, sofern die Ursachen dieser spannungsinitiierten Gefügetektonik vermindert werden: dies sind nach Ausführungen von H.E. Evans hauptsächlich die Unterschiede in der thermischen Ausdehnung zwischen der Matrix und den schützenden Deckoxiden. Wenn es also gelingt, den Unterschied der Ausdehnungen unterkritisch zu halten oder sogar auf Null zu bringen, braucht die Matrix nicht mehr notwendigerweise duktil zu sein, sondern kann nunmehr "hochwarmfest", zum Beispiel durch Entwicklung einer γ-γ'-basierten Schichtlegierung, gestaltet werden, ohne dass die Haftung der Schutzoxide gefährdet ist. Hier ist ein weiteres Ziel der Schichtentwicklung, die Verringerung der thermischen Ausdehnung der Schichtlegierung, genannt.

Nach dem allgemeinen Wissensstand ist bekannt, dass sich die mechanische Festigkeit von Ni-Legierungen durch feindisperse Ausbildung der γ'-$Ni_3$(Al,Ta)-Phase in der Matrix bis zu höchsten Temperaturen wirksam steigern lässt. Bekannt ist auch, dass Ta einen günstigen Einfluss auf die Oxidationsbeständigkeit haben kann. Re ist ein bekannter Hoch-Temperatur-Mischkristallhärter in einer Nickelmatrix und unterstützt die Korrosionsfestigkeit in Legierungen. Die Haftung der thermisch erzeugten Oxidschichten auf der γ'-$Ni_3$Al-Phase wird durch die Ausbildung von Poren an der Me/MeO-Grenzschicht bekanntermaßen verschlechtert [J.D. Kuenzly et al.: Oxidation of Metals 8, No.3(1974) S. 139-178]. Jedoch wird die Bildung der Poren durch Legieren der Phase mit geringen Gehalten an Yttrium unterbunden. Eine Vermeidung der Porenbildung durch Einlegieren von Pt-Metallen ist ebenfalls bekannt und wird beispielsweise von P. A. van Manen ["The Mechanism of the Oxidation of Nickel Aluminium Coating Alloys", Proefschrift Techn. University Delft 1991, sowie H.J.W.de Wit et al.: The precious metal effect in high temperature corrosion, Materials Science Forum 154(1994) 109-118] detailliert beschrieben.

Bekanntermaßen führt eine Schicht aus (refraktärmetallfreien) MCrAlY-Haftschichten auf einkristallinen (hochrefraktärmetallhaltigen) Superlegierungen zu erheblicher Interdiffusion und Bildung unerwünschter TCP-Phasen in der Interdiffusionszone und nachfolgender Ausbildung unerwünschter Deckoxide. Diese Beobachtungen wurden eingebracht in die Entwicklung einer Haftschichtlegierung, die auf Grund ihrer Phasen und ihrer chemischen Zusammensetzung sowohl aluminiumoxidbildend sein soll als auch wenig Interdiffusion auf Einkristallsuperlegierungen aufweisen soll.

Die erfindungsgemäßen Legierungen können insbesondere durch Elektronenstrahlaufdampfung als Wärmedämmschicht aufgebracht werden. Prinzipiell ist aber auch jedes andere Verfahren der Schichtaufbringung oder Beschichtungsverfahren möglich.

Ausführungsbeispiele:

Beispiele 1 bis 4, Referenzlegierung 1: Legierungsentwicklung

Folgende Legierungszusammensetzungen, die innerhalb einer Reihe von Vakuuminduktionsschmelzen hergestellt worden sind, haben sich als besonders langsam oxidierend erwiesen und sind im Vergleich zu einer gedampften NiCoCrAlY-Schicht als Referenz 1 aufgeführt:

Tabelle 1:

| Zusammensetzung der Legierungen, deren Oxidationskinetik in Fig. 1 dargestellt ist | | | | | | | |
|---|---|---|---|---|---|---|---|
| Legierungsbeispiele | Ni | Cr | Al | Ta | Re | Y | Phasen |
| NiCoCrAlY- at.% Referenz 1 Masse% | 61,8* 72** | 14,55 15 | 23,37 12,5 | | | 0,2 8 0,5 | γ+β |
| | * 42,11 Ni + 19,69 Co | | | ** 49 Ni + 23 Co | | | |
| Beispiel 1* at.% Masse% | 60,09 61,8 | 15,19 13,8 | 19,90 9,4 | 2,63 8,4 | 1,86 6,1 | 0,3 3 0,5 | Re:Ta = 0,71 γ+β+δ |
| Beispiel 2** at.% | 70,33 68,19 | 8,66 7,44 | 15,19 6,77 | 2,91 8,7 | 2,88 8,86 | 0,0 3 | Re:Ta = 0,99 |

*Legierungsklasse I

**Legierungsklasse II

Tabelle 1: (fortgesetzt)

| Legierungsbeispiele | Ni | Cr | Al | Ta | Re | Y | Phasen |
|---|---|---|---|---|---|---|---|
| Zusammensetzung der Legierungen, deren Oxidationskinetik in Fig. 1 dargestellt ist | | | | | | | |
| Masse% | | | | | | 0,04 | γ+γ'+δ |
| Beispiel 3** at.% | 71,5 | 4,06 | 15,4 | 3,51 | 5,42 | 0,11 | Re:Ta = 1,54 |
| Masse% | 64,79 | 3,26 | 6,42 | 9,81 | 15,58 | 0,15 | γ+γ'+δ |
| Beispiel 4** at.% | 63,7 | 4,6 | 15,38 | 5,54 | 10,73 | 0,05 | Re:Ta = 1,94 |
| Masse% | 50,54 | 3,23 | 5,61 | 13,55 | 27,01 | 0,06 | γ+γ'+δ |

**Legierungsklasse II

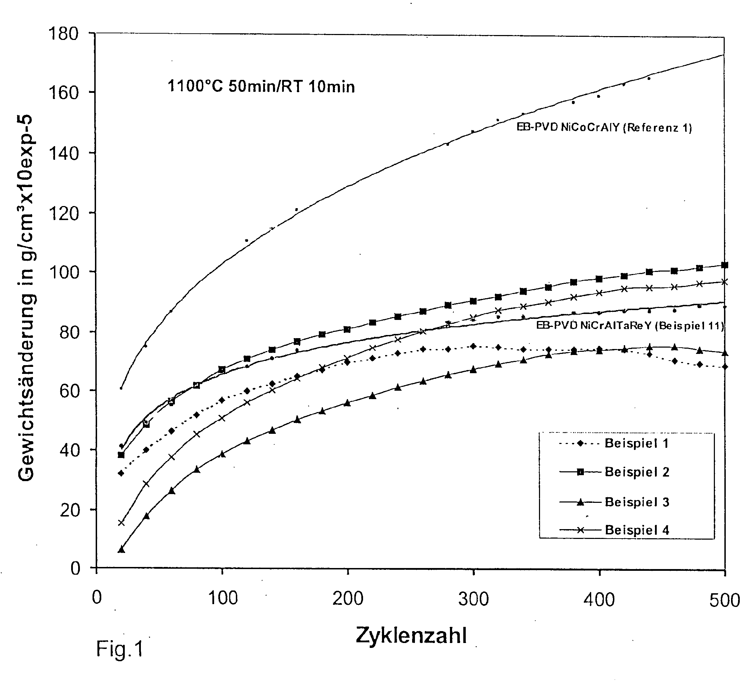

Dabei bildete sich eine Schutzoxid-Schicht aus, die vornehmlich aus α-Al$_2$O$_3$ bestand und im wesentlichen für die Gewichtszunahme verantwortlich ist. Die Oxidationskinetik bei zyklischer Oxidation bei 1100°C (1100°C 50 min/ Raumtemperatur 10 min) zeigt Fig. 1.

Zusammenfassend zeigen durchgeführte Oxidationsversuche und die Fig. 1, dass Legierungen mit einer γ+γ' (+δ)-Phasenzusammensetzung bei 8 bis 27 % Re, 7 bis 13 % Ta (in Masse%) und 1 bis 8 % Cr (in Masse%) neben weiteren Legierungsbestandteilen, die geringste Oxidationsneigung bei repräsentativen Einsatztemperaturen von 1000°C und 1100°C aufweisen. Das Verhältnis von Re zu Ta sollte dabei zwischen 1 und 2 liegen. Diese Legierungen werden hier als Legierungsklasse II bezeichnet, Legierungen mit einer γ+β(+δ)-Phasenzusammensetzung wiederum, die in der Dauer der Haftung der Oxidschichten im zyklischen Oxidationsversuch den γ+γ'(+δ)-Legierungen leicht unterlegen sind, zeigen bei 7 bis 13 % Ta, 5 bis 7 % Re und 7 bis 15 % Cr (in Masse%) neben weiteren Legierungsbestandteilen die geringste Oxidationsneigung. Das Masseverhältnis von Re zu Ta ist bei diesen Legierungen zwischen 0,5 und 1 besonders vorteilhaft. Diese Legierungen werden hier als Legierungsklasse I bezeichnet. Höhere Gehalte an δ-Re-Phase sind in beiden Fällen akzeptabel, da sie das Oxidationsverhalten nicht beeinträchtigen.

Beispiele 5 bis 10, Referenzlegierungen 2 und 3:

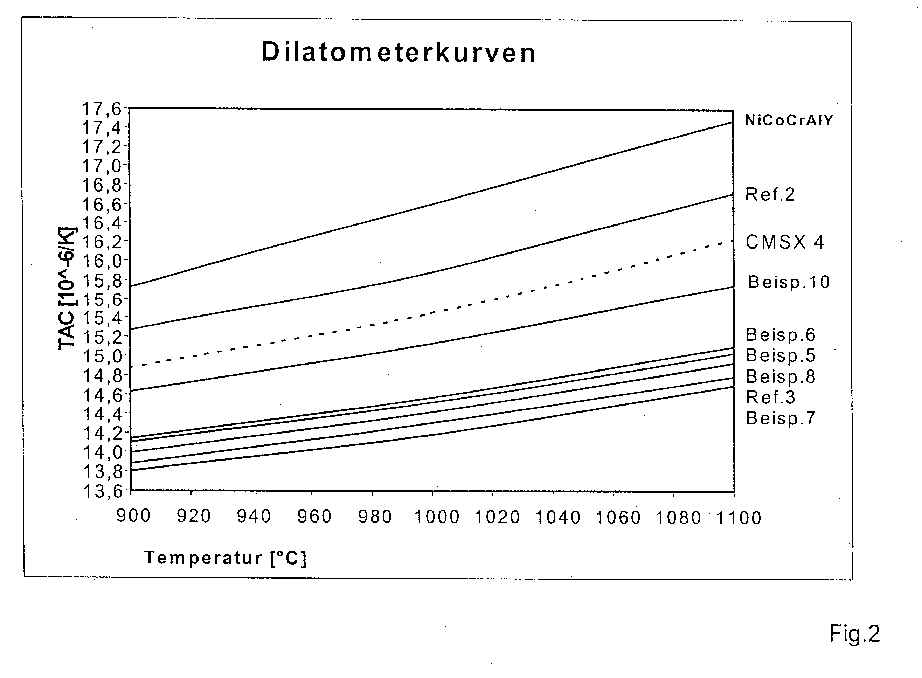

Die thermischen Ausdehnungskoeffizienten einiger untersuchter Legierungen im Vergleich zu NiCoCrAlY und zu einer einkristallinen Ni-Superlegierung sind in Fig. 2 im Intervall 900 bis 1100°C dargestellt. Die Zusammensetzung dieser Legierungen ist in Tabelle 2 aufgeführt.

Tabelle 2:

| Bezeichnung | Ni | Cr | Al | Ta | Re | Phasen |
|---|---|---|---|---|---|---|
| Zusammensetzung der Legierungen, deren thermisches Ausdehnungsverhalten in Fig. 2 dargestellt ist (Yttriumgehalte liegen in Spuren von etwa 0,2 Masse% vor) | | | | | | |
| Beispiel 5* at. % | 71,61 | 4,06 | 15,40 | 3,51 | 5,42 | γ + γ' + δ |
| Masse % | 64,9 | 3,3 | 6,4 | 9,8 | 15,6 | |
| Beispiel 6* at. % | 75,77 | 3,55 | 13,98 | 3,72 | 2,98 | γ + γ' + δ |
| Masse % | 71,3 | 3,0 | 6,1 | 10,8 | 8,9 | |
| Beispiel 7* at. % | 75,07 | 3,73 | 12,92 | 4,63 | 3,65 | γ + γ' + δ |
| Masse % | 68,1 | 3,0 | 5,4 | 13,0 | 10,5 | |
| Referenz 2 at.% | 73,84 | 3,11 | 19,21 | | 3,84 | γ' + δ |

*Legierungsklasse II

Tabelle 2:   (fortgesetzt)

| Zusammensetzung der Legierungen, deren thermisches Ausdehnungsverhalten in Fig. 2 dargestellt ist (Yttriumgehalte liegen in Spuren von etwa 0,2 Masse% vor) | | | | | | |
|---|---|---|---|---|---|---|
| Bezeichnung | Ni | Cr | Al | Ta | Re | Phasen |
| Masse % | 75,7 | 2,8 | 9,1 | | 12,5 | |
| Beispiel 8* at. % | 76,04 | 3,28 | 13,13 | 4,57 | 2,91 | $\gamma + \gamma' + \delta$ |
| Masse % | 70,1 | 2,7 | 5,6 | 13,0 | 8,5 | |
| Beispiel 9* at. % | 63,70 | 4,70 | 15,38 | 5,54 | 10,73 | $\gamma + \gamma' + \delta$ |
| Masse % | 50,5 | 3,23 | 5,6 | 13,6 | 27,0 | |
| Beispiel 10* at.% | 79,07 | 3,13 | 12,56 | 2,46 | 2,78 | $\gamma + \gamma' + \delta$ |
| Masse % | 76,0 | 2,7 | 5,6 | 7,3 | 8,5 | |
| Referenz 3 at.% | 75,63 | 5,21 | 12,4 | 6,697 | | $\gamma + \gamma' + \eta$ |
| Masse % | 70,9 | 4,3 | 5,4 | 19,4 | | |

*Legierungsklasse II

Dabei zeigen dilatometrische Untersuchungen, dass sich der Ausdehnungskoeffizient einerseits durch hohe Ta-Gehalte und in geringerem Maße sowohl durch Re als auch durch einen hohen Anteil an $\delta$-Re-Phase absenken lässt. Es müssen also keine neuen Phasen in das Metallsystem eingebracht werden, um einen geringen Ausdehnungskoeffizienten zu erzielen. Damit unterscheidet sich diese Entwicklung grundlegend von den Ansätzen im Stand der Technik, der zwar eine geringere thermische Ausdehnung der Schichtlegierungen propagiert, diese aber ausschließlich durch Einbringen zusätzlicher metallischer oder oxidischer Phasen mit der für sie charakteristischen geringeren Ausdehnung bezweckt.

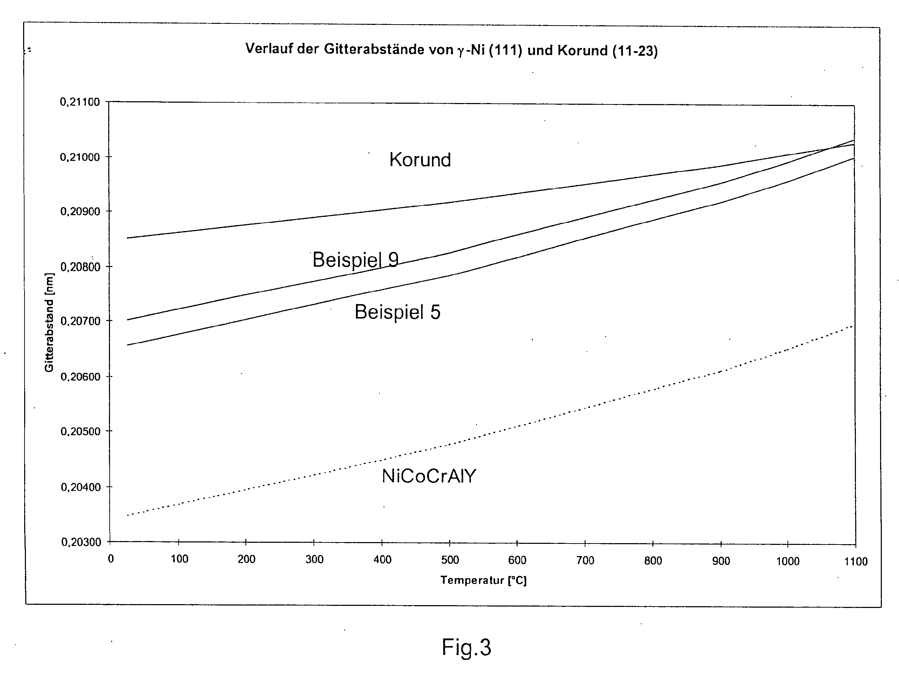

Die Größe der Elementarzellen der erfindungsgemäßen Legierungen ist gegenüber derjenigen von Nickel in NiCoCrAlY von etwa 0.35243 nm aufgeweitet. Darüber hinaus stellt sich eine engere atomare Passung zwischen Legierungsmatrix und der sich bildenden Schutzschicht aus Korund ein. Im Detail betrifft dies insbesondere den atomaren Gitterabstand zwischen den am dichtesten belegten Gitterflächen, nämlich den Kristallflächen Ni (111) und $\alpha$-Al$_2$O$_3$ (11$\bar{2}$3), der eine starke Annäherung aufweist, wie dies in Fig. 3 in Abhängigkeit von der Temperatur gezeigt wird. Zwei erfindungsgemäße Legierungen sind dabei im Vergleich zur NiCoCrAlY-Standardlegierung zwischen Raumtemperatur (RT) und 1100 °C wiedergegeben. Der Gitterabstand der (11$\bar{2}$3)-Ebene von $\alpha$-Al$_2$O$_3$ ist 0.2085 nm bei Raumtemperatur und wird mit etwa 0.2101 nm bei 1000°C angenommen bei einem zugrundegelegten Ausdehnungskoeffizienten von 8.00 x 10 $^{-6}$K$^{-1}$. Damit ist die Angleichung der Gitterparameter zum (hypothetischen) Zwecke einer auf Epitaxie beruhenden und damit erleichterten $\alpha$-Al$_2$O$_3$- Bildung während der Oxidation hinreichend genau getroffen worden und erfüllt damit, wie dies auch die niedrigen Oxidationswerte nahe legen, die Besonderheit des dargelegten Entwicklungsansatzes.

Damit sind die erfindungsgemäß beabsichtigten Eigenschaften der Schichtlegierung wie hohe Kriechfestigkeit durch $\gamma'$ - Ausscheidungshärtung und Mischkristallhärtung, geringste Oxidationsneigung bei Einsatztemperaturen, sowie an Superlegierungssubstrate und Korund weitgehend angeglichene thermischen Ausdehnungskoeffizienten erreicht worden. Die erzielbaren hohen Härten und Kriechfestigkeiten insbesondere durch $\gamma'$-Ausscheidungshärtung las-sen sich im Bedarfsfall reduzieren, indem diese Ausscheidungsphase reduziert oder eliminiert wird durch eine entsprechende Substitution des Nickelgehaltes durch Kobalt.

Beispiele 11 bis 13:

Haftschichtaufbringung auf Superlegierung und Eignungstest

Es wurden drei Chargendurchgänge mit Zweitiegel-Elektronenstrahlaufdampfung einer NiCrAlTaReY-Legie-rung durchgeführt und dabei folgende Zusammensetzungen und Phasen erzielt:

Tabelle 3:

| Chemische Zusammensetzungen von mit Zweitiegel Elektronenstrahl-bedampfung in Springstrahltechnik aufgedampften Haftschichten | | | | | | | |
|---|---|---|---|---|---|---|---|
| Charge | Ni | Cr | Al | Ta | Re | Y | Phasen |
| Beispiel 11** at.% Gew.-% | 77,35 73,3 | 3,01 2,5 | 13,27 5,8 | 2,73 8,0 | 3,43 10,3 | 0,21 0,3 | γ+γ'+δ |
| Beispiel 12** at.% Gew.-% | 77,71 74,9 | 3,05 2,6 | 13,69 6,1 | 2,13 6,3 | 3,24 9,9 | 0,18 0,3 | γ+γ'+δ |
| Beispiel 13** at.% Gew.-% | 76,45 71,4 | 3,51 2,9 | 13,07 5,6 | 2,53 7,3 | 4,23 12,5 | 0,21 0,3 | γ+γ'+δ |

** Legierungsklasse II

Eine beschichtete Superlegierungsprobe gemäß Beispiel 11 wurde einem zyklischen Oxidationstest bei 1100 °C (1100 °C 50 min/Raumtemperatur 10 min) unterzogen. Die Oxidationskinetik hierzu ist in Fig. 1 eingefügt.

Eine weitere beschichtete Superlegierungsprobe gemäß Beispiel 11 wurde sowohl unbehandelt (a) als auch im Anschluss an übliche Kugelstrahl- (b) und Glühbehandlungen (c) auf Eigenspannungen hin untersucht. Dabei wurde die dem Fachmann bekannte einkristalline Superlegierung CMSX-4 verwendet.

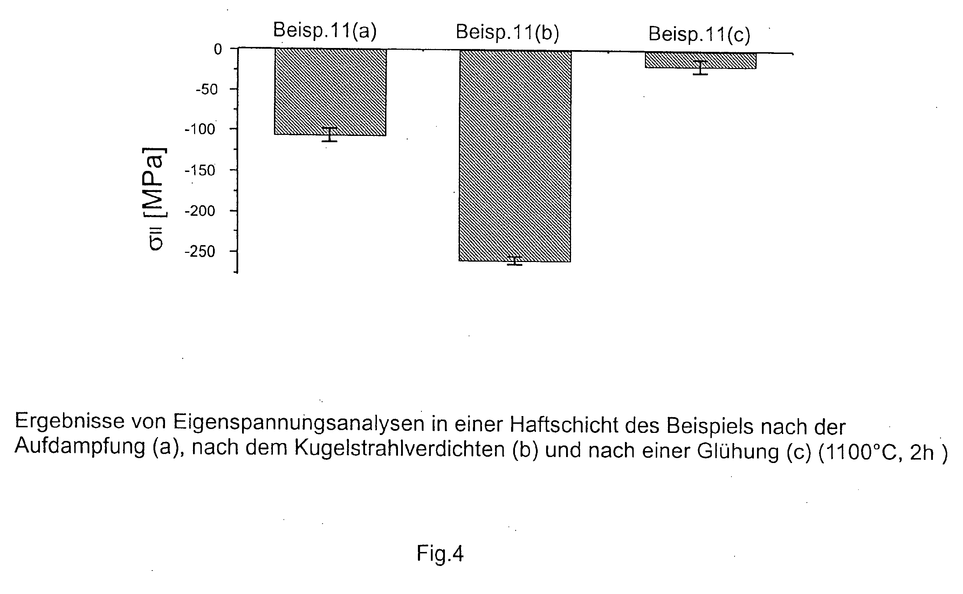

Die in den Schichten gemessene Spannung zeigt Fig. 4.

Nach der Beschichtung treten geringe Druckspannungen in der Schicht bei der Abkühlung auf Raumtemperatur auf, die durch Kugelstrahlverdichten noch stark vergrößert werden, jedoch durch die abschließende Glühung praktisch verschwunden sind. Dieser abschließende Zustand ist als förderlich für ein gutes Ermüdungsverhalten sowie für die Verringerung der Interdiffusion zu werten.

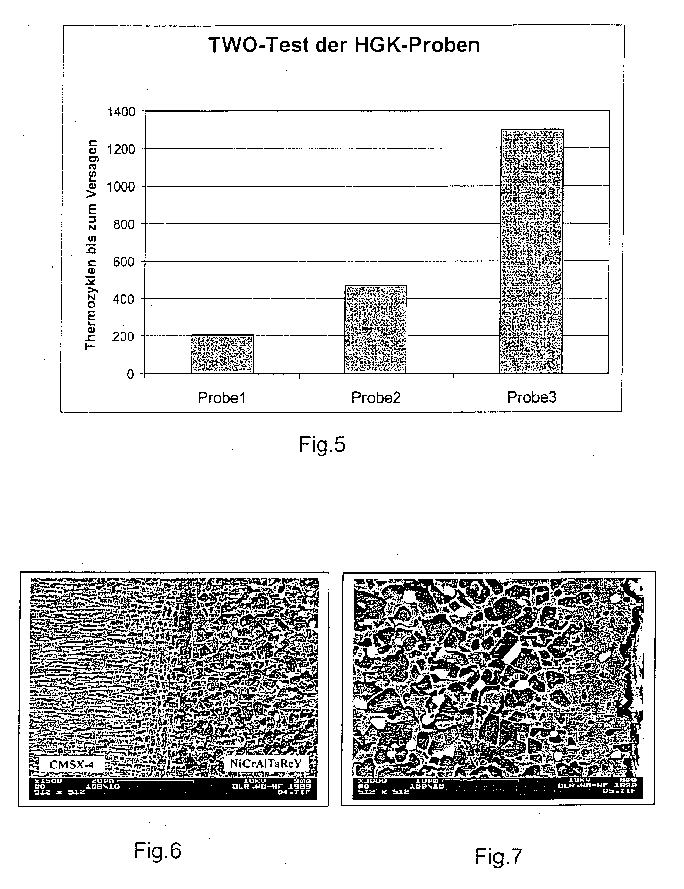

Eine NiCrAlTaReY-beschichtete Zylinderprobe (Nr.2) gemäß Beispiel 11 wurde im Anschluss an übliche Kugelstrahl- und Glühbehandlungen mit einer 220µm dicken EB-PVD-Wärmedämmschicht versehen. Als Vergleichsprobe wurde eine mit alternativ mit einer kommerziell hergestellten PtAl-Haftschicht versehenen ansonsten gleichartigen Probe (Nr.1) im Thermowechselversuch (50 min auf 1100°C, 10 min bis RT) geprüft. Eine weitere Probe (Nr.3), die bereits mit einer gleichartigen kommerziellen mit PtAl-Haftschicht versehen war, wurde mit einer aufgedampften NiCrAlTaReY-Legierungsschicht gemäß Beispiel 12 belegt. Die Substratlegierung war in allen drei Fällen die Superlegierung CMSX 4. Die Proben wurden dann einem praxisnahen Vergleichstest im Thermowechselversuch (50 min auf 1100 °C, 10 min bis Raumtemperatur) unterzogen. Die erzielten Thermozyklen bis zum ersten Abplatzen der Wärmedämmschichten sind in Fig. 5 wiedergegeben. Darin zeigen die durch unterschiedliche Haftschicht-Kombinationen erzielten Lebensdauern folgende Rangfolge: PtAl-Standardbezugsschicht <NiCrAlTaReYY-Haftschicht < Doppelschicht aus PtAl + NiCrAlTaReY.

Die Interdiffusionszone der Probe Nr.2 zeigt Fig. 6. Die Probe war 368h bei 1100°C und hat dabei eine nur 5µm breite Interdiffusionszone hervorgerufen. Sie ist frei von Sprödphasen, sogenannten TCP-Phasen (topologically-close packed) und besteht aus γ'-Phase.

Die äußere Zone der Probe 3 zeigt Fig. 7. Die Probe war während rund 1300 Zyklen insgesamt 1083h bei 1100°C an Luft und zeigt keine Abplatzungen der WDS. Die aluminiumverarmte Zone, sie ist zu erkennen an der Abwesenheit der ansonsten dominierenden γ'-Phase (tiefgeätzt), ist lediglich etwa 10µm breit. Beide Bilder belegen die hohe Langzeitstabilität dieser Schicht nach innen gegen Interdiffusion und nach außen gegen Oxidation. Diese Materialeigenschaft legt es nahe, diesen Schichttypus in geringerer Schichtstärke als bisher üblich anwenden zu können.

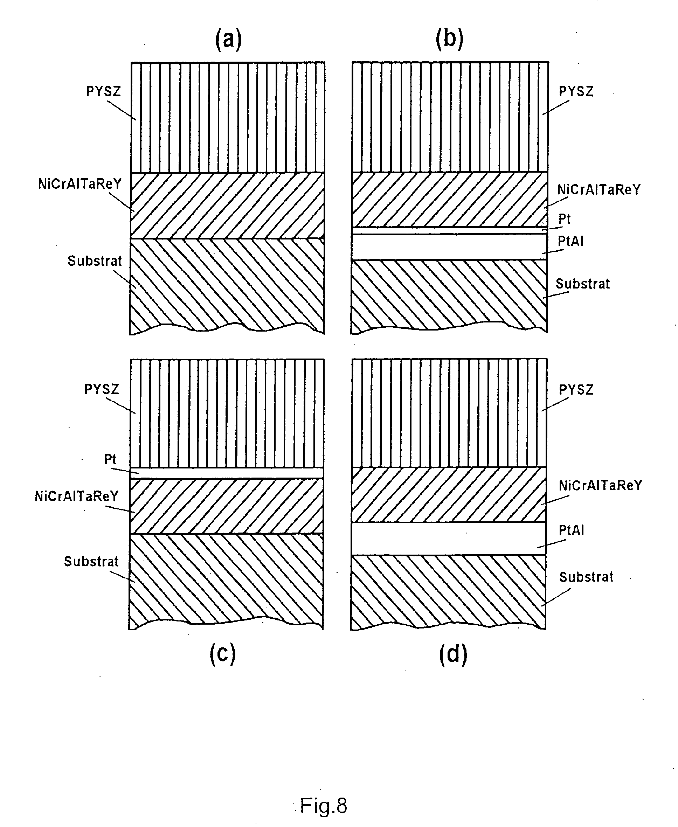

In der Fig. 8 (a) wird der grundsätzliche Aufbau eines Substrats beschrieben, das mit einer erfindungsgemäßen Nickellegierung beschichtet ist. Diese Nickellegierung wiederum ist durch eine Wärmedämmschicht (PYSZ) geschützt.

In der Fig. 8 (b) befindet sich zwischen der erfindungsgemäßen Haftschicht und dem Substrat eine untergelegte PtAl- oder Alitierschicht sowie eine zusätzliche Legierungs- oder Elementeschicht der Übergangsmetalle in einer Dicke von 2 bis 15 μm. Diese wird insbesondere aus Nickel, Cobalt oder Platin vor der abschießenden Haftbeschichtung aufgebracht. An Stelle der PtAl- oder Alitierschicht oder auch unter der PtAl- oder Alitierschicht kann ebenfalls eine Schicht aus Pt, Re, Ta oder Legierungen daraus mit Ni in 2 bis 15 μm Dicke aufgebracht werden.

In der Fig. 8 (c) wird auf die erfindungsgemäße Haftschicht eine Platinschicht, insbesondere in einer Dicke von 2 bis 10 μm aufgebracht.

Darüber hinaus ist es möglich, analog der Fig. 8 (b) entweder nur eine Alitier- oder Platinschicht unter der erfindungsgemäßen Haftschicht anzubringen wie in Fig. 8(d) für den Fall einer PtAl-Zwischenschicht angedeutet worden ist.

## Patentansprüche

1. Chemische Zusammensetzung von Ni-Legierungen zum Oxidationsschutz und zur Haftanbindung von keramischen Wärmedämmschichten mit der Zusammensetzung: 1 bis 8 Masse% Cr, 5,2 bis 7 Masse% Al, 8 bis 30 Masse% Re, 6 bis 15 Masse% Ta, 0,03 bis 1,0 Masse% Y und Rest Ni.

2. Zusammensetzung nach Anspruch 1, **dadurch gekennzeichnet, dass** sie im wesentlichen aus $\gamma/\gamma'$- oder $\gamma'$-Phasen bestehen und 0 bis 50 % $\delta$-Re-Phase enthält.

3. Zusammensetzung nach Anspruch 1, **dadurch gekennzeichnet, dass** sie einen thermischen Ausdehnungskoeffizienten der Legierungen ($\alpha_{RT \text{ bis } 1000°C}$ im Bereich von 13,5 bis 15,5 x $10^{-6}K^{-1}$) aufweisen, der gegebenenfalls durch Einstellen der Ta- und Re-Gehalte oder durch einen Anteil an $\delta$-Re-Phase eingestellt wird.

4. Zusammensetzung nach Anspruch 1, **dadurch gekennzeichnet, dass** das Massenverhältnis von Re zu Ta im Bereich von 0,9 bis 2,0 liegt.

5. Chemische Zusammensetzung von Ni-Legierungen zum Oxidationsschutz und zur Haftanbindung von keramischen Wärmedämmschichten mit der Zusammensetzung: 7 bis 15 Masse% Cr, 8,5 bis 11 Masse% Al, 1 bis 10 Masse% Ta, 5 bis 7 Masse % Re, 0,05 bis 1,0 Masse % Y, und Rest Ni.

6. Zusammensetzung nach Anspruch 5, **dadurch gekennzeichnet, dass** das Massenverhältnis von Re zu Ta im Bereich von 0,2 bis 1,0 liegt.

7. Zusammensetzung nach Anspruch 6, **dadurch gekennzeichnet, dass** die Schichten im wesentlichen aus $\beta/\gamma$-Legierung bestehen.

8. Zusammensetzung nach Anspruch 5, **dadurch gekennzeichnet, dass** neben der Möglichkeit der Mischkristallhärtung von $\gamma$-Phase durch Re die zusätzliche Härtung durch Ausscheidung der $\delta$-Re-Phase in beliebigen Volumenanteilen erfolgt.

9. Zusammensetzung nach einem der Ansprüche 1 bis 8 **dadurch gekennzeichnet, dass** der Anteil an Ni teilweise oder vollständig durch Co in den entsprechenden Atomanteilen ersetzt ist.

10. Zusammensetzung nach einem der Ansprüche 1 bis 9, **dadurch gekennzeichnet, dass** man die Schichten mittels PVD-, CVD-, oder PS-Verfahren aufgebracht worden sind.

11. Substrate aus ein- oder vielkristallinen Superlegierungen, beschichtet mit einer chemischen Zusammensetzung nach einem der Ansprüche 1 bis 10 als Haftbeschichtung.

12. Substrate nach Anspruch 11, wobei die Dicke der Haftbeschichtung 20 bis 300 μm beträgt.

13. Substrate nach einem der Ansprüche 10 bis 12, **dadurch gekennzeichnet, dass** die Haftbeschichtung zusätzlich entweder mit einer Alitier-, einer PtAl- oder einer Schicht der Platinmetalle, insbesondere einer Pt-Schicht, gegenüber dem Substrat unterlegt ist.

14. Substrate nach einem der Ansprüche 12 oder 13, **dadurch gekennzeichnet, dass** die Haftbeschichtung zusätzlich mit einer Schicht aus Pt, Re, Ta oder Legierungen daraus mit Ni bzw. Co oder beiden Elementen in einer Dicke von 2 bis 15 μm unterlegt ist.

**15.** Substrate nach Anspruch 10, **dadurch gekennzeichnet, dass** die Oberfläche der Haftbeschichtung eine Pt-Schicht, insbesondere in einer Schichtdicke von 3 bis 10 μm aufweist.

**16.** Substrate nach einem der Ansprüche 10 bis 15, **dadurch gekennzeichnet, dass** die Oberfläche der Haftbeschichtung, mit oder ohne Pt-Schicht, eine keramische Wärmedämmschicht aufweist.

**17.** Verfahren zur Herstellung von beschichteten Substraten nach einem der Ansprüche 11 bis 16 durch Glühung unter reduzierender Atmosphäre, insbesondere Wasserstoff, oder im Vakuum und bei Temperaturen im Bereich von 1100 von 1200°C im Verlauf von 10 min und 5h zur Diffusionsanbindung.

**18.** Verfahren zur Herstellung von beschichteten Substraten nach Anspruch 17, **dadurch gekennzeichnet, dass** die Wärmedämmschicht mittels Elektronenstrahlaufdampfung aufgebracht wird.

Fig.1

EP 1 275 743 A2

**Dilatometerkurven**

Temperatur [°C]

TAC [10^-6/K]

NiCoCrAlY
Ref.2
CMSX 4
Beisp.10
Beisp.6
Beisp.5
Beisp.8
Ref.3
Beisp.7

EP 1 275 743 A2

Fig.2

Fig.3

EP 1 275 743 A2

Ergebnisse von Eigenspannungsanalysen in einer Haftschicht des Beispiels nach der Aufdampfung (a), nach dem Kugelstrahlverdichten (b) und nach einer Glühung (c) (1100°C, 2h )

Fig.4

EP 1 275 743 A2

## TWO-Test der HGK-Proben

Fig.5

Fig.6

Fig.7

**(a)** **(b)**

PYSZ

NiCrAlTaReY

Substrat

PYSZ

NiCrAlTaReY

Pt

PtAl

Substrat

PYSZ

Pt

NiCrAlTaReY

Substrat

PYSZ

NiCrAlTaReY

PtAl

Substrat

**(c)** **(d)**

Fig.8